# EUROPEAN PATENT SPECIFICATION

(11) **EP 3 174 678 B1**
(45) Date of publication and mention of the grant of the patent: **09.08.2023**
(21) Application number: 15804059.2
(22) Date of filing: 05.06.2015
(51) Int. Cl.: B29B 11/14, B29C 45/16, B29C 49/06, B29C 49/22, B29B 11/08

(54) **RIBBED PREFORM FOR CONTAINER AND METHOD OF OVERMOULDING THEREOF**
GERIPPTE VORFORM FÜR BEHÄLTER, UND VERFAHREN ZUR UMSPRITZUNG DAVON
PRÉFORME NERVURÉE POUR RÉCIPIENT ET PROCÉDÉ DE SURMOULAGE DE CELLE-CI

(30) Priority: 05.06.2014 BE 201400432
(43) Date of publication of application: 07.06.2017
(73) Proprietor: Resilux, 9230 Wetteren (BE)
(72) Inventor: DE CUYPER, Dirk, 9070 Destelbergen (BE); DIERICKX, William, 9070 Destelbergen (BE)
(74) Representative: Petsis, Christos
(86) International application number: PCT/BE2015/000028
(87) International publication number: WO 2016/004486

(56) References cited:
- EP-A1- 1 155 807
- EP-A2- 2 925 501
- WO-A1-97/13696
- WO-A1-2014/015445
- WO-A1-2014/069116
- WO-A2-2013/000044
- FR-A1- 2 898 293
- GB-A- 2 047 606
- US-A1- 2004 069 735
- US-A1- 2006 121 153
- US-A1- 2009 212 459
- US-A1- 2012 094 043
- US-A1- 2012 256 356
- DATABASE WPI Week 199924 Thomson Scientific, London, GB; AN 1999-282284 XP002754640, -& JP H11 90975 A (TOYO SEIKAN KK) 6 April 1999 (1999-04-06)
- DATABASE WPI Week 199334 Thomson Scientific, London, GB; AN 1993-269485 XP002757649, -& JP H05 185493 A (NISSEI ASB KIKAI KK) 27 July 1993 (1993-07-27)

## Description

### Field of the invention

The present invention relates to hollow plastic articles, particularly ribbed preforms intended as a container, notably in a particular application in overmoulding, as an injection molding technique.

### Background of the invention

It is started herein with a method for producing plastics preforms by injection moulding, intended for getting processed into plastics containers. Primary raw material for the production of a preform is injected into a mould having a cavity side and a core side, between which the preform is formed. After this, the mould is opened into its two halves -cavity side and core side- wherein each core thereof bears a preform.

For preforms, overmoulding constitutes an interesting technique to be adopted when the preform needs a very high light barrier, such as in containers for dairy products. In this case, an inner preform is made of a light-tight or opaque material, whilst a corresponding outer preform is made which is transparent or has a colour. As described in PCT/BE2007/000040, when blowing the preform into a milk bottle, it is white on the outer side, whilst on the inner side, there is a black or grey layer of plastic which produces the light barrier. An extrusion process of overmoulding could be used there, consisting in producing preforms to begin with the injection moulding of the grey inner layer, over which a 2^{nd} white layer is further injected. This guarantees the light barrier which is required for ultra-high temperature (UHT) milk bottles.

The overmoulding preform and the bottle blown therefrom can also be used however for other application fields, such as when gas-tight, moisture-tight or chemical barriers are required.

A method exists in which the inner preform, as first injected product, is transferred to the cavity/core of the outer preform as product yet to be injected, by means of a transport and transfer system incorporated in the mould. Although this system offers an advantage as regards cycle time, it also has many drawbacks.

US 2005/0249902 A1 concerns the compression of overmoulded preforms for containers, in which a compression injection moulding production method for a two-layer preform is disclosed. This technique is unrelated, however, to an overmoulding injection moulding process involving a stretching and blowing technique.

In EP 1970181, a two-layer preform produced by an overmoulding technique is described. The preform comprises two layers, which each consist of a composition of polyethylene terephthalate (PET), titanium dioxide (TiO₂) and a dye with light-absorbing capacity in the visible light spectrum. However, neither a specific preparation method nor an elaborate overmoulding technique is proposed.

US 2010/0092711 discloses a method and mould for producing a two-layer preform by overmoulding which differ considerably from the invention below, however, both in terms of mould design and of the course of the production method. Firstly, the technique and the mould described therein use the same core for injection into both the primary and secondary mould cavities, which calls for a vertical displacement of both the cavity side and the core side of the mould. This technique further uses alternate primary and secondary cavities. Although this reduces the amount of vertical movement which is necessary to effect transfer of the primary preforms, this also implies, however, a more complex hot runner system having alternate nozzles for the primary and secondary materials respectively. A drawback of this known system is that it needs investment in a new non-standard machine, a special mould using an as yet unknown technology, and a good deal of peripheral equipment.

It is further known that there are currently limits on the output of the production system, notably no higher than 24-fold, which, in itself, is a limitation for the output, so that an increase in this is eagerly awaited. In case the requested number of products to be made is large, several such systems must be purchased, which entails additional costs. This system also operates with moving parts in a mould which is particularly complex, so that this is very prone to wear as a result of these moving parts.

### Prior art

Document US 3,327,907 essentially relates to a pressurised container provided with reinforcement ribs.

JP-HO4-296520-A describes the manufacturing of composite materials, wherein as a first step an injection moulding part is formed in a first cavity; in a second step another material is pressed over this injection moulding part with a press, and in a third step a next injection moulding part is added thereto. In this method, a pressing technique is thus adopted, which by no means fits into the process which is referred to here.

WO 94/16871-A1 only describes the use of two robot arms for the production of PET preforms, which is simply regarded here as a specific application in the production of overmoulding preforms, without any contribution being made to the overmoulding technique considered here.

In DE-198 56 356-A1, a method is also described for the production of overmoulding preforms, for which, however, a mould with rotating core side is utilized, and wherein the injected product remains constantly on the same core and is placed into another cavity. However, this is completely opposite to the move as little as possible, especially in a rotary direction, for the sake of preventing wearing thereof.

US2004/151937-A1 discloses a mould for the injection moulding of PET preforms, wherein the neck and cavity consist of a material having a different thermal conductivity in order to obtain a different cooling. This falls completely outside the application to the method which is referred to here.

JP-2004 082622-A has no relation to preforms, which constitutes though the basic intermediate product whose production is specifically meant here, in particular for the production of containers, with its thereto associated specifies.

Finally, JP-H04296520 of MITSUBISHI Heavy IND neither discloses a process for preforms nor does it mention the injection moulding technique therein, in contrast with the present invention wherein no other technique is presently envisaged. Moreover, according to this document, an initial injection is made and that so injected product is brought to the bottom, and only then a second injection is made, in contrast to the present intention proceeding to inject both simultaneously. Furthermore, the process is conducted from top to bottom here. There is a priori only one cavity and core visible on the drawings, wherein the whole system as described appears geared to one single cavity, resp. core.

WO 97/13696 A1 discloses a method and apparatus for forming a multilayer preform by means of a preform mold assembly for the injection molding of a multilayer preform for use in the blow molding of container.

US 2012/094043 discloses a blow molding device.

GB 2047606A discloses a method of forming an optical design pattern in PET articles, resp. a method of strengthening an optical design pattern formed by said method,

JPH1190975A discloses a multilayer preform with recovery polyester resin layer, manufacture of the preform, and multilayer container molded from the preform. The problem to be solved is that to prevent exposure of an inside layer by forming the layer of virgin polyester resin, forming an outside layer having a specific thickness using recovery polyester resin on its outer surface, and further disposing a rib on a body, thereby reusing the recovery resin. The solution provides that a virgin polyester resin is primarily injected in a primary mold to form a molding to become an inside layer. This is moved to a secondary mold. Recovery polyester resin is secondarily injected on an outer surface of the molding to form at least a two-layer structure having an outside layer molded. At this time, a thickness of the layer is set to about 0,5 to 2,5 mm. And a rib formed from the body to a part directly under a neck part is disposed on the molding. Thus, the recovery resin is effectively reused. And, elution of impurities in the recovery resin in its content is prevented to stabilize a dimensional accuracy of the molding and to prevent deformation of the part or the like.

FR2898293A1 discloses a thin-walled multilayer preform, which comprises at least one internal layer made of a first material and comprising variable thickness and symmetric, and at least one second external layer which is molded on the first one and which is made of a second material, wherein the minimal mean thickness of the preform is defined by a formula.

WO2014/069116A1 discloses a biaxial stretch blow molded container that is formed by layered preforming through injection moulding using multiple nozzles, to create a delamination function comparable to that of a delamination bottle formed by direct blow molding.

US2004/069735 A1 discloses a blow-molded container comprising an outer layer of a synthetic resin forming the outer shell of a finite shape, an inner layer of a flexible synthetic resin, which is peelably laminated with the outer layer and forms an inner bag; and a pair of adhered zones of a vertical strip type, which is formed axisymmetrically on the central axis of a container to adhere and fix the outer and inner layers over the entire height and is located so as to avoid the positions of air introduction ports provided in the outer layer to introduce air into the void between the outer and inner layers.

US2012/0256356A1 discloses a laminated and molded body obtained by coextruding and molding at least two kinds of resin materials, considered preferable as a blow-molding aimed preform, a direct-blow molded bottle, having at least one layer constituted of a colored layer having a thickness continuously or intermittently varied in a direction parallel to the extruding direction.

EP2925501 A2 discloses a hollow injection molded article comprising essentially all features of the preamble if claim 1, but fails to disclose the characterizing portion of claim 1.

### Aim of the invention

The object consists of making injection molded products on which vertical ribs are provided, but also in a broader conception than just overmoulding products, and also wider than just preforms -in this case ribbed preforms-, such as so-called "upper PV's" being an upper pressure vessel or chamber at the top of a pressurised container, in short a combination of light weight, in any case, and strength and mechanical anchoring in the case of overmoulding.

### Object of the invention

More specifically, it is essentially intended to provide products having vertical longitudinal ribs by injection molding with a higher wall thickness/injection length ratio than is normally limited -in the meaning that when injection molding PET products with a certain wall thickness such as 1 mm thick in a cold mold-, on the one hand, and to realize thin-walled light-weight products with an increased strength, on the other hand. This is notably based on an overmoulding method which brings a solution to the aforementioned problems, and remedies to the abovementioned disadvantages and/or shortcomings. It is thus desired to inject thinner-walled products with an increased strength, which is not known as such for preforms. PET can hardly be injected over a distance of merely 60 mm on 1 mm thick indeed, i.e. barely 6 cm if it is 1 mm thick. However, if an injection by means of said ribs is required yet with an average wall thickness of 1 mm, and all in PET, this would need at least a certain wall thickness, thereby making the final product far too heavy. So, ribs are made therein, which have a certain thickness with the required wall thickness of 1,3 mm. Between the ribs, there is merely available 0,6 average, thereby still yielding 1 mm as result. A non-uniform distribution is thus allowable yet, provided that the overall ratio is 1,3 mm. This should be continuous, and it must be an injection molding length. The configuration consists of a rib type, resp. tooth profile.

When a given length must be observed, for which a flow path/wall thickness ratio of 60:1 needs to be satisfied, e.g. if need be 100:1 or even 120:1, in any case > 60:1, the product cannot be made completely with this thickness, because then it does not get fully injected. Conversely, in case the product is really made this way with a full injection, it would be much too heavy.

However, one cannot reach 100:1 either. So one is faced with two states that cannot be realized separately, whereas this is only achievable with an average however, in which the only solution to satisfy both of these conditions consists of a ribbed preform according to the invention with a certain profile allowing an averaging. Thus, the profile should be smoothed rather than just a block shape. When a material is injected, it will constantly follow a path. The first phase allows these ribs to get fully injected and in a second step, the adjacent parts between the ribs starting from the said ribs are getting fully injected, because one cannot inject through completely between the ribs, in one time. Thanks to the ribbed preform, less PET material is needed or it yields a preform which is stronger with less PET material than in the case of simply having a mean equal thickness.

The first advantage thus consists of providing articles that are lighter average. This is not useful for preforms however because they may generate warming up restrictions, since certain areas thereof are thicker so that they warm up more slowly, whereas other areas are thinner which heat up faster during blowing. So even though preforms can be made as such, they cannot be blown however, thereby resulting in that no bottle ever gets blown therefrom, so it is completely useless. Indeed, a preform is merely an intermediate injection molding product that is necessarily intended to be blown.

However, not only preforms are meant here, but also injection molded products in general. Indeed, in addition to injection molding, a second objective consists of half-finished products which don't need to be blown any more, such as the abovementioned upper pv's constituting the top component of a pressurized container.

This second aspect thus aims an additional reinforcement without increasing the thickness of the entire wall, thus actually consisting of the combination of both factors including a thin-walled light-weight product and the reinforcement, whereas said increased strength integrates light weight and ridge, as a result of the incorporation of a rib profile in the product.

In a special application of the ribbed preform in overmoulding, there is an inner and outer preform with contiguous and mutually interlocking longitudinal ribs with their resp. mutually engaging profiles, being in mesh like in gear tooth engagement: in said inner and outer preform the ribs hook into each other, whereas the final product shows no rib, with the great advantage that the inner and outer preform can be injection molded in two steps each alone all by themselves. Indeed, the inner and outer preforms are injected separately. Accordingly the milk preform can be injected still lighter with a particularly advantageous embodiment of the invention being applied thereto. Both the inner and the outer preform must meet the so-called 60 : 1 rule, contrarily to the article having those ribs for which this rule does not impose itself. So, more weight is saved yet. Less PET material is needed for such preform than in the case that the same preform is injected in one single time.

A further feature is when the inner and the outer preform are not made both of PET, but the inner preform is injected from a different material, such as polypropylene and the outer preform in PET, which are two non-complementary materials. In that case, providing those ribs with an undercut offers extra added value thereto. Indeed, polypropylene and PET do not normally adhere to one another. When blowing, this causes delamination, which is thus prevented thanks to the invention, by a mechanical anchoring of the two layers. Generally, in accordance with a preferred embodiment of the invention, the outer side is the one from PET to maintain both visually and physically contact physically contact with a PET bottle, and polypropylene is applied on the inside, thereby creating a main barrier. A polypropylene bottle is felt completely different indeed, it is much heavier. Besides, PET is better formable.

### Summary of the invention

The present invention, wherein inner and outer preforms are carried out with consecutive vertical ribs whereas the final product remarkably does not show any ribs at last, is further set out in more detail hereafter.

In addition, a particular overmoulding application is further proposed according to the invention in which the inner and outer preforms are performed in two different, non-complementary materials. In this case, the inner and outer preforms can be carried out with their contiguous vertical ribs being provided with an undercut, whereby a mechanical anchoring is generated between the inner and outer preform.

In short, there is proposed according to the invention a hollow injection-molded article made of plastic material, esp. comprising a wall portion and a bottom portion extending along an axis ℓ thereof, wherein the wall portion is composed of at least one layer of variable thickness ε, wherein a plurality of ribs is provided in said axis direction, constituting a set of longitudinal ribs, wherein said wall has a tooth profile with a periodic nature which varies periodically between a minimum threshold value m and a maximum value M which is determined by both material parameters being a typical injection mold length Ls and/or a variable thickness ratio εmax/εmin which are characteristic for said plastic material.

Said hollow injection molded article consists of a preform for blow molding a container, comprising a neck portion with its wall portion adjacent thereto, extending along the axis ℓ, wherein the preform wall is composed of at least one layer with a variable thickness ε, wherein a plurality of ribs extending in said axis direction are provided, whereby longitudinal ribs are formed at the surface thereof. It consists of an overmoulding preform comprising two different materials, with an inner preform and an outer preform, wherein the inner and outer preforms have contiguous vertical ribs, whereas the final product has no such longitudinal ribs remaining visible. The inner and outer preforms are composed of two different and non-complementary materials,

Remarkably the inner and outer preforms have contiguous vertical ribs with an undercut, and a mechanical anchoring between the inner and outer preforms is established therewith.

According to an advantageous embodiment of the invention, said hollow article has a square wave profile, esp. a square wave profile showing steep flanks, more particularly a profile with variable width, even more particularly a profile with a periodic variability.

According to a preferred embodiment of the invention, said hollow articles with vertical ribs are injection-molded to products with a higher wall thickness/ injection-length ratio, thereby to achieve thin-walled light-weight products with an increased strength.

More particularly, the space between the ribs is not greater than twice the width of a rib.

A specific hollow article consists of primary plastic base material and at least one additional secondary material in at least a sub-area thereof, wherein the preform has at least two sub-areas, a primary and a secondary area respectively that are adjacent by pairs with their mutual contact sides and that have a mutually different coloration that is continuous as a whole, wherein it is bicolored; particularly wherein the sub-areas have an alternating profile of mutually substantially parallel separating lines which extend according to the axis, thereby generating at least one vertical strip with alternate color; more particularly wherein the sub-areas have a symmetrically alternating profile thereby forming a so-called zebra profile made from vertical strips of alternating color.

At least one of the sub-areas may be opaque and/or at least the other sub-area is light translucent; particularly at least said opaque, resp. light translucent areas may be colored; more particularly sub-areas have a mutually strongly contrasted dye; even more particularly at least the primary sub-area is transparent.

The inner and outer preform may have a different color, or only with the inner or outer preform being colored, particularly including selective openings in the form of specific designs and variations in colors, esp. 2; more particularly wherein the inner preform is colored opaque, wherein a through-recess is provided in the longitudinal axis of the preform, and a transparent outer preform, particularly comprising esp. a transparent control window, over the entire length of the preform, resp. container making the filling level thereof observable.

According to a further embodiment of said hollow article according to the invention, it consists of an overmoulding preform, comprising two different materials, with the inner and the outer preform made of a different injection molding material comprising a barrier, esp. a gas barrier, a moisture barrier or a light barrier; more particularly wherein the outer preform is composed of standard PET, and the inner preform of a high-barrier or hotfill material.

According to a yet further embodiment of said hollow article according to the invention, the inner preform is composed of a polyolefin, and the outer preform of PET, whereby it combines the mechanical and gas barrier properties of PET with the chemical barrier, moisture barrier and thermal properties of polyolefins.

According to a still further embodiment of said hollow article according to the invention, which is mainly intended for containers for dairy products having a very high light barrier, it comprises an inner preform made of a material that is light-tight or opaque, and a corresponding outer preform that is transparent or has a color. The corresponding milk bottle is white on the outside, while on the inside it has a black or gray plastic layer as light barrier, thereby using an overmoulding process consisting of making the preforms starting with injection molding the gray inner layer, on which a second white layer is furthermore injected, thereby establishing the light barrier which is required for ultra-high temperature (UHT) milk bottles, whereas the overmoulding preform and the bottle blown therefrom can also be used in other application areas, such as when gas, moisture- or chemical barriers are required.

This invention also relates to an insert overmoulding method of the abovementioned type, wherein notably plastic preforms intended to be processed into containers are manufactured, wherein a plastic molding product is inlaid in a cavity of an injection mold mounted on a core thereof in a first stage, and wherein another product is injected on or around the first inlaid product in a second stage. According to a basic embodiment of the method of the invention, it is remarkable in that the plastics preform is made with an integrated added inner preform. The raw material for producing the composite preform and the added inner preform are injected into the mould with its cavity side and a corresponding core side, all at the same time, i.e. both for a primary preform and a secondary preform, but not to be considered as intended for the same composite preform, however.

In a 1^{st} step, the injection mould containing the injected products is closed, whilst a gripping member on which a set of receiving members are fitted is brought into a set-aside standby position A.

In a 2^{nd} step, the mould is split into its cavity side and core side, wherein the cores for the composite preform on the core side being the primary cores resp., and the cores for the added inner preform being the secondary cores resp., each bear an injected product, namely a composite resp. secondary preform.

In a 3^{rd} step, the gripping member is set in motion under the drive of a custom-made drive unit, according to a preset moving direction between the set-aside standby position A, in which said gripping member is inactive and stands ready for onward movement, and an operating position B that is matched with the core side of the mould. The injected and cooled products are received in the gripping member by means of suction means, and each product is received in a receiving member corresponding thereto.

In a 4^{th} step, the gripping member is moved into a further operating position C and places the received added secondary inner preforms onto the primary cores, and keeps holding said preforms. After placing the secondary conjugated preforms onto these primary cores, the gripping member reverts to said set-aside standby position A in order to deliver the assembled composite preforms with an integrated added inner preform, to the outlet of the system for further treatment for the conditioning thereof. The cycle is then recommenced from the 1^{st} step, whereby the mould is reclosed.

In this case, only the injection moulding technique, limited to plastics preforms instead of hollow articles is adopted, and no other technique. Both primary and secondary preforms are injected simultaneously, with the incorporation of a suitable hot runner system.

The mould which is used in the system has a relatively simple construction, like existing moulds which are readily available, thus involving less complexity. There are no moving parts indeed, thus no displacements in the mould, thereby causing less wear. As a result, the whole system becomes cheaper, whilst machinery and peripheral equipment can be deployed for standard preforms.

All these features according to the invention constitute valuable advantages thereof.

It is also endeavoured according to the invention to transpose this complexity from the mould to the deployed robot cooperating therewith, bearing in mind that the robot is visible from the outside and is directly accessible -which is also more manageable in the event of maintenance or repair- in contrast to the mould. By virtue of this, the production process is better controllable, especially visually, so that this readily becomes more reliable as well, at least for the intended applications. Thanks to the use of existing (standard) machines, this yields a greater flexibility as a result of maintained standardization.

A primary core is used for injection, whilst a secondary core is used for injection into the secondary cavity. Following the first injection step, the secondary preform is removed from the secondary cavity by an advantageously robotized grab arm, it is transported vertically and it is placed onto the primary core. This means that the vertical movement which is necessary to displace the secondary preform from the secondary core to the primary core takes place without movement of the cavity side or core side of the mould. This precludes any movements of the heavy and complex mould sides, which simplifies the process, prevents excessive wearing of the mould and allows the use of standard machines.

Furthermore, no use is made of alternate primary and secondary cavities, which implies a more complex hot runner system though having alternate nozzles for the primary and secondary material, respectively. On the contrary, all primary cavities and cores can advantageously be grouped together in a dedicated subfield of the mould, namely a secondary field, notably its bottom part, and all secondary cavities and cores in another sub-area of the mould, namely a primary field, notably its top part, or possibly vice versa.

The primary and secondary sub-fields of each mould side are organized in a matrix pattern in a predefined number of rows and columns respectively containing an equal number of elements, just as for the primary and secondary sub-fields of the gripping member corresponding thereto. This subtends a higher number of cavities, in particular 32-fold, even extending up to 64 and above, being preferably an exponent of 2 starting from the power rank 5, if need be, even 48- or 96-fold.

According to a further embodiment of the method according to the invention, in a sequential representation of overmoulding, the injection mould is closed in Ø₁, in step Ø₂ the mould is opened, in step Ø₃ the said grab arm is displaced between both mould halves in which said products are received, and in step Ø₄ the bottom products are placed onto top cores by this one grab arm.

Said grab arm may be provided with a vacuum plate as the receiving member for the take-up of injection moulded products consisting of said preforms, wherein the relevant mould plate constitutes the movable side having a predefined number of cores, intended for a set of primary resp. secondary preforms, and a corresponding number of cores for the secondary preforms alone, which each occupy virtually their dedicated half of the plate surface on the core side of the mould, more particularly on the top half and the bottom half. The mould plate constituting the fixed side has a corresponding number of cavities for the primary preforms and a further set having a still corresponding number of cavities intended for the secondary preforms, which occupy the other half of the plate surface, in particular the remaining bottom half.

Thus in step 1, the one mould half serves as the movable side with the cores thereon, opposite to the other mould half, which serves as the fixed side, in which the cavities also are, wherein the finished products are injected and are located between the relevant cores and cavities.

In the following step 2 thereof, the mould may be opened, and the movable mould half opposite to the fixed mould half removed therefrom in parallel. The top products in the top half constitute the outer preforms. The inner preforms are received therein, with the formation of a finished product through the combination of a top product and an inner preform, wherein the bottom products present in the bottom half constitute the inner preforms.

In the third step thereof, the grab arm with the vacuum plate, which was in the standby position, may be moved vertically downwards into position C and the products are transferred from the cores to the vacuum plate.

In the fourth step of the method, the grab arm with the vacuum plate may be moved vertically upward with the injection moulded products, whereupon the bottom products, being the inner preforms, are transferred onto the top cores.

The robot arm may then be further moved vertically upwards, with said number of top products therein, wherein these are then expelled from the vacuum plate and are hence finally ready for packing. The procedure is conducted from bottom to top here, i.e. the other way round compared to the known procedure.

As soon as the robot arm disappears from between the mould, the mould may be closed again as in step Ø1 and it is thus made ready to injection-mould a following series of products, being the integrated composite preforms at the top and a corresponding number of inner preforms at the bottom.

At least one second gripping member may be used, which is displaced under the drive of a second drive unit, particularly wherein the latter is coordinated with the first drive unit, between said position B and the operating position C, wherein these gripping members are coordinated with one another for the mutual successive takeover and discharge of the produced preforms.

The gripping members may be moved according to a to-and-fro movement in the direction of their respective longitudinal axes Y1, Y2, wherein the gripping members are fitted above the mould and their respective movement with respect to each other is time-lagged, particularly wherein the time shift is adjustable, more particularly as a function of the number of rows of cores and cavities respectively.

Said at least two gripping members may be mounted on a support according to a mounting plane virtually perpendicular to the ground, and are moved in this mounting plane, according to a second direction, under the drive of a further drive unit, between a standby position A and the disengaged operating position B.

Said at least two gripping members may be successively moved according to two directions virtually at right angles to each other, wherein the first motional direction is chosen virtually vertical to the ground and both gripping members are moved between said position B and operating position C.

A first cooling time is set for the cooling, in the cavity side, of the injected preforms. Following expiry of the set first cooling time, the cavity side and the core side of the mould are removed from each other up to a mutual distance apart, which is sufficient to allow one of the aforementioned gripping members to be introduced into a thus formed space between the cavity side and the core side, wherein the take-up side of said one gripping member is matched with the core side, one gripping member is moved from said position B to said space, and said one gripping member is thus brought into operating position C with respect to the core side. The preforms are cooled there in the respectively corresponding receiving members for a second set cooling time and, following expiry of said cooling time, the preforms are passed from the core side facing one gripping member into respectively a receiving member corresponding to each core. After this, one gripping member is brought back into position B, both gripping members are shifted transversely until the further gripping member is brought into position B, and one gripping member is brought into said standby position A; subsequently, the movement executed by said one gripping member during the completed cycle is executed analogously by the further gripping member and thus, a further set of preforms is taken over by the latter from the core side of the mould and the further gripping member is then driven back into position B.

During a first cycle said mould opens after expiry of a first cooling time, injected preforms standing on the core side. Once a space is formed between the core side and the cavity side, which space is sufficiently large to allow the first gripping member to be placed therein with a reliable transference of the preforms, said first gripping member is moved under the drive of a motor constituting said drive unit, along the longitudinal axis Y1 of said first gripping member between said core side and the cavity side until it stands in the operating position C. The first gripping member then takes over a complete first set of preforms from the core side. After the preforms are transferred, the first gripping member is led back along the longitudinal axis Y1 to position B, in which the preforms are held in respective sleeves, constituting the receiving elements, of the first gripping member during a following cycle 02 which commences from the moment when the first gripping member is brought into position B. The preforms are accommodated in their respective sleeves, where they are subjected to a suitable cooling, wherein the preforms of the first cycle O1 are meanwhile still present in the second gripping member. Shortly before the end of the following cycle O2, the second gripping member is moved from the standby position A into position B, whilst the first gripping member is moved into a standby position A' with an analogous takeover process which is executed with the second gripping member. After said first gripping member has reached the position B, preforms are removed, and said steps are repeated for the following cycle Oₙ in a repeated process.

This movement of both gripping members runs at the same time in said second direction X, where the supporting plate is moved under the drive of a further motor constituting the further drive unit.

A device intended for the implementation of a method as set out above, comprises a mould for the forming of the preforms, which mould has mutually detachable cavity and core sides, on which a number of protruding cores are fitted for the holding of preforms, and to a gripping member provided with a set of receiving members, which can be directed at the cores, for the cooling and reception of the preforms. The gripping member is movable under the drive of a drive unit, between a disengaged position B and an operating position C, the gripping member being coupled with the core side. At least one second gripping member is provided, which is equipped with a further set of receiving members with which the cores of the core side of the mould can be aligned. Said at least second gripping member is movable under the drive of a further drive unit, between said disengaged position B and the operating position C, wherein this gripping member is coupled with the core side and the movement can be coordinated with that of the first gripping member.

Each gripping member may be formed by a grab arm, wherein the receiving elements are constituted by sleeves, in which the cavity side of the mould is located on a fixed machine platform, wherein the core side is fixed on a mobile platform of the machine, and wherein a core puller is provided, which has a detaining effect on the preforms remaining on the respective cores of the core side, by way of a locally applied clamping connection.

Two supporting plates or tables may be provided, each having a gripping member with separate control.

In summary, by virtue of the special set-up of standard elements, which are used according to specific method steps, it is possible to operate in a simplified, and globally less complex manner. The system consists in dividing a standard mould, in particular 64-fold, into two fairly equal halves, i.e. 32 bottom parts for the inner preforms and 32 top parts for the outer preforms, or possibly vice versa.

It must be clear that the scope of the invention is not limited to plastics preforms as semi-finished products, but also embraces hollow articles as final end products. In addition, it will also be clear that the robot arm, can also make a horizontal movement in order to place the secondary injection moulding part into the primary cavity, in addition to the vertical movement for displacing the injection moulding parts described above.

Further specifies and features of the invention are defined in further sub-claims.

The method and apparatus are further illustrated by the appended drawings, wherein further details are explained in more detail in the following description in some exemplary embodiments of the invention with reference to the attached drawings.

### Brief description of the drawings

Fig. 1 is a schematic linearly projected view of a main embodiment of a semi-finished product with a rib profile for an undercut resp. mechanical anchoring of a ribbed preform as an application of overmoulding for a container according to the invention.
Fig. 2 represents a variant of Fig. 1 with steep flanks.
Fig. 3 and 4 are each a mixed representation of a composite preform according to the invention as semi-finished product, notably obtained by using the process as further presented below in Fig. 11.
Fig. 5 to 10 show a series of different views of a further embodiment of a finished product as top portion of a pressurized container as an injection molded product according to the invention.
Fig. 11 is a general sequential representation of an overmoulding cycle of a main embodiment of the method according to the invention.
Fig. 12 shows step 1 of the method, wherein the mould is closed and the grab arm is in a standby position.
Fig. 13 is a cross section along the line D-D of the device represented in the previous Fig. 12.
Fig. 14 is an analogous representation to the previous Fig. 13, consisting of a cross-sectional view through the line A-A, though in this case with regard to the inner preform as the finished product.
Fig. 15 represents the following phase or step 2, wherein the mould is opened.
Fig. 16 represents a section along line E-E in Fig. 15, on which the topmost 32 products constitute the composite preforms, with inner preforms.
Fig. 17 is an analogous representation to Fig. 16, but of a section along line B-B, representing the 32 bottom products, only representing the 32 inner preforms.
Fig. 18 is a schematic representation of the finished product thus made, consisting of said composite preform in which the inner preform is accommodated.
Fig. 19 further shows the third phase of the method according to the invention, wherein the grab arm with the vacuum plate, coming from the standby position, now receives all products from the cores.
Fig. 20 is a sectional representation along line C-C in Fig. 19, showing a cross section, wherein the bottommost 32 products, being the inner preforms, are transferred into the vacuum plate.
Fig. 21 schematically represents the fourth step of the method according to the invention, wherein the grab arm moves upwards with the vacuum plate with the injection moulded products.
Fig. 22 further shows a cross section along line G-G in Fig. 21, wherein the injection moulded inner preforms are on the top cores.

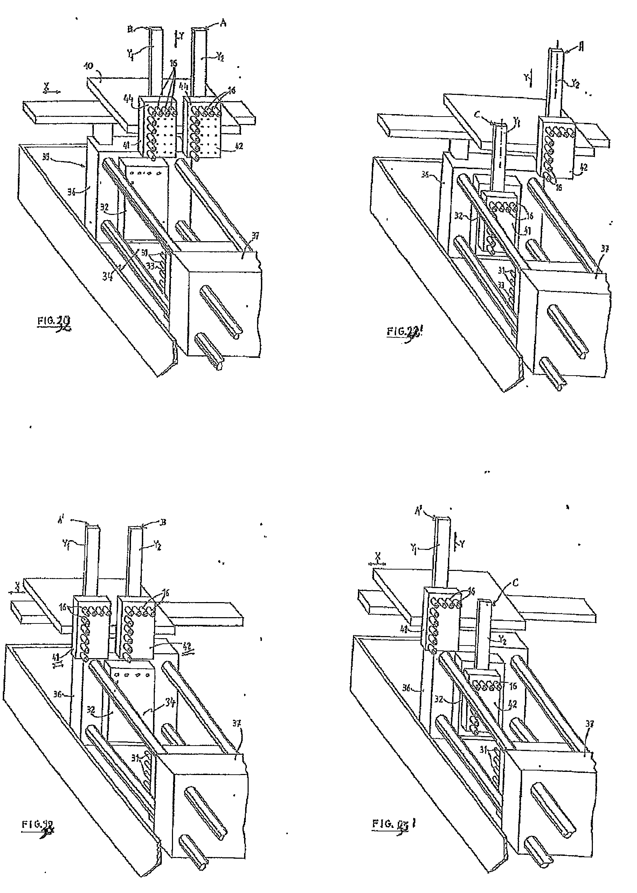

Fig. 23 represents a 3D perspective view of a detail of the mould components.
Fig. 24 represents a front view of a detail of the mould components according to
Fig. 23.

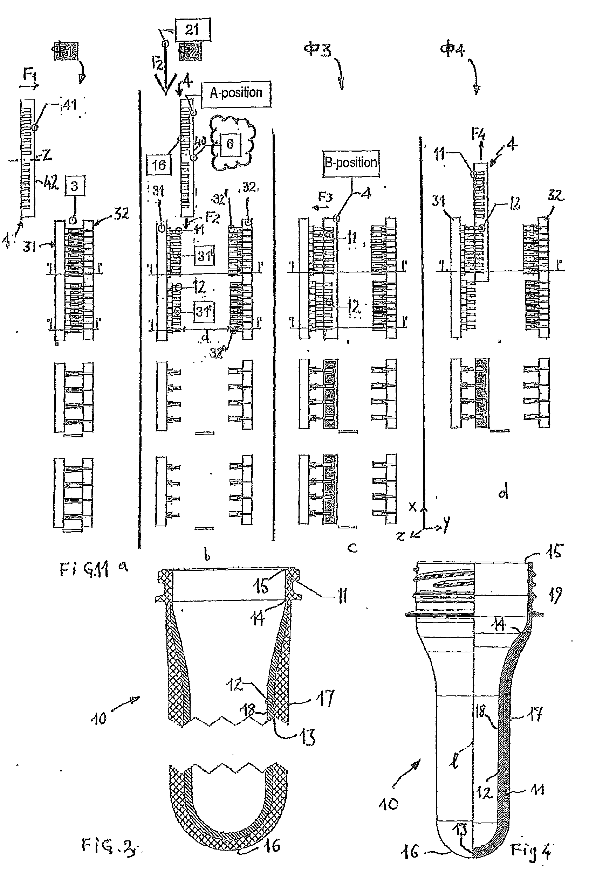

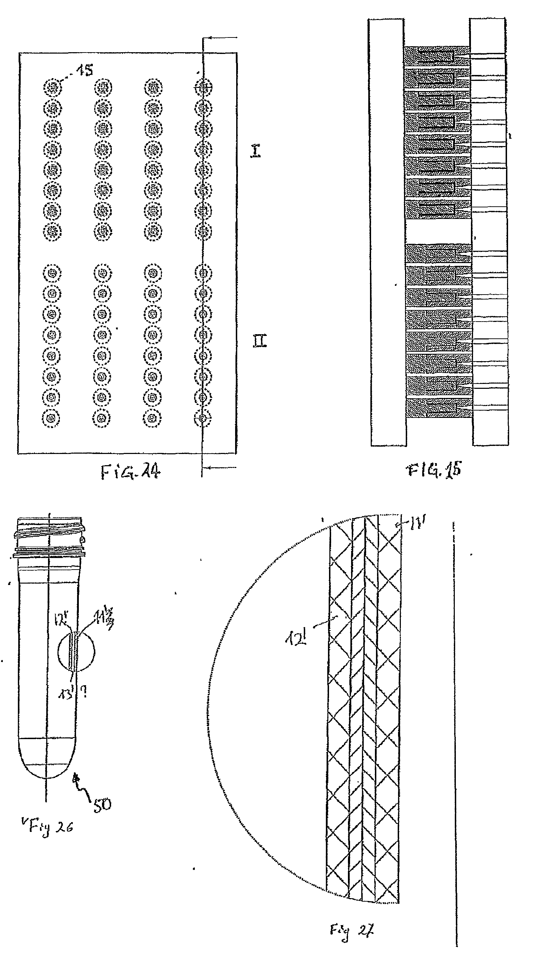

Fig. 25 represents a detail in enlarged view from Figs. 11 & 12 respectively.
Figs. 26-33 each represent a view of the robot components.

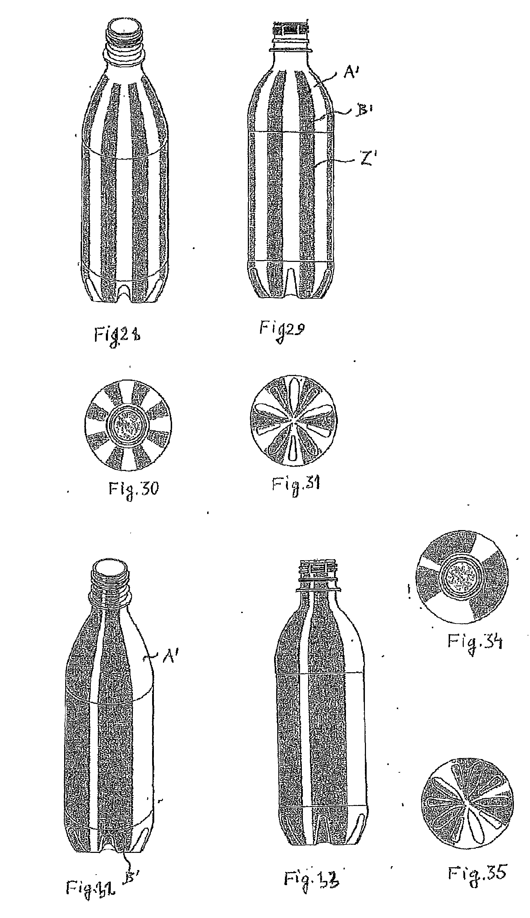

Figs. 34 and 35 are a mixed representation of a composite preform according to the invention as a semi-finished product, especially obtained by applying the method as represented in Fig. 11.
Figs. 36 and 37 show a combined application of overmoulding and coating on a preform, resp. the wall section thereof.

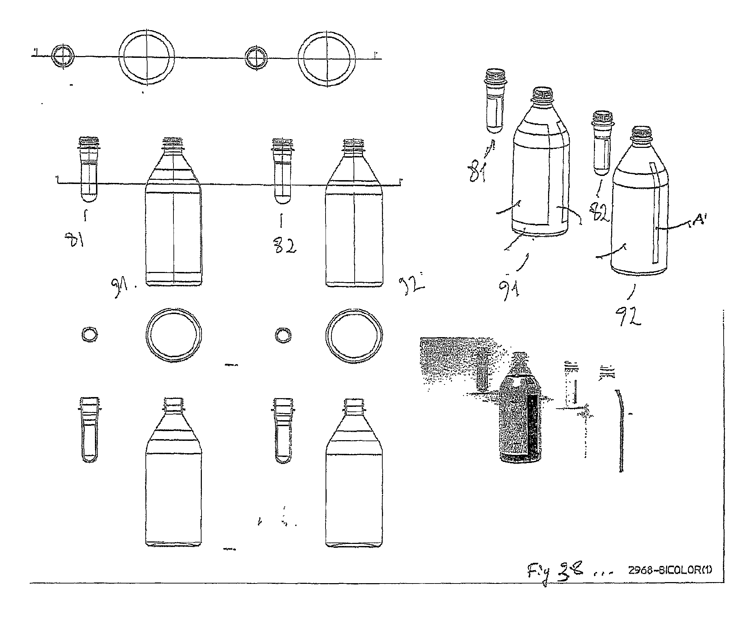

Fig. 38 et seq. show a combined application of overmoulding and coating on a preform, thereby including zebra configurations.

### Description

Generally this invention relates to the injection molding of objects with vertical ribs 96 for injection-molding products having a higher wall thickness/injection length ratio than under normal limitation and providing thin-walled, light-weight products or semi-finished products with increased strength.

More specifically, a special application is described in the form of semi-finished products, such as for example a preform 10; 81, 82 in overmoulding, wherein an inner preform and an outer preform with contiguous vertical ribs are performed, in which surprisingly enough the final product shows no ribs however.

In a remarkable overmoulding application, the inner and outer preforms are executed in two different and not complementary materials. In this case, the inner and outer preform with contiguous vertical ribs can be made with an undercut, so that a mechanical anchoring is established between the inner and outer preform.

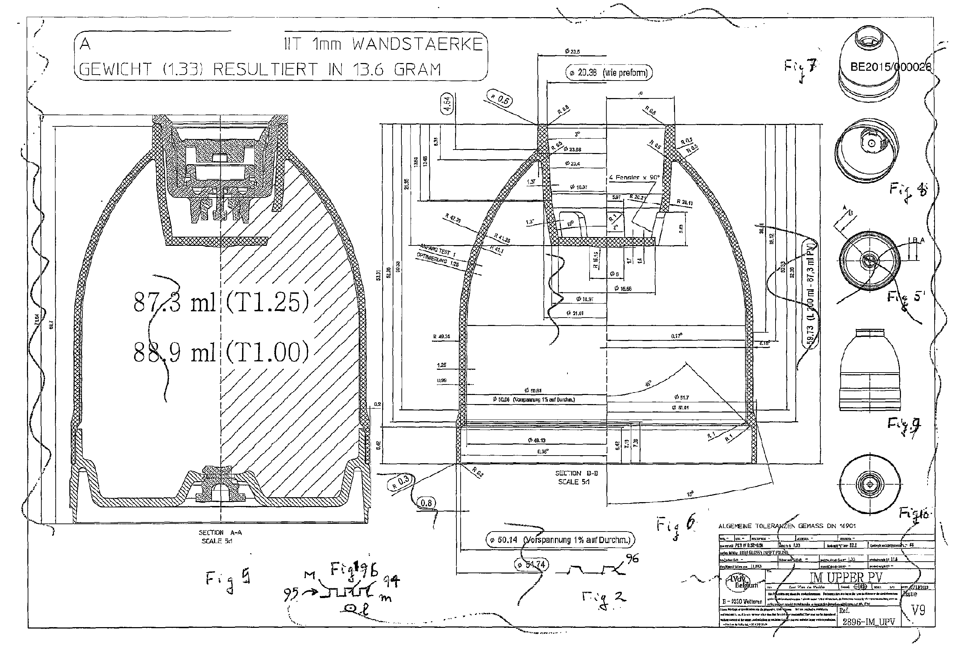

Different profiles of ribs 96 as well as different profiles 95 for undercut resp. mechanical anchoring are represented among which one is shown with steep flanks in Fig. 1, e.g. wherein the width of the space between longitudinal profiles represents maximum 2 times the width of a rib 96; and further a variant thereof with oblique flanks in Fig. 2.

Mainly products with vertical ribs 96 are injection molded for making products with a higher wall thickness/injection length ratio than under normal standards, on the one hand, and in order to achieve thin-walled and light-weight products with an increased strength, on the other hand, notably based on an overmolding process. In this way, one achieves remarkably to inject thinner-walled articles yet with an increased strength, which is not known in itself for preforms.

Next to ribbed preforms 10 forming injection molded products with vertical ribs, finished products 1 are also proposed yet with various views notably in Figs. 5 to 10. The range is thus broader than just overmoulding products, and wider than only preforms as well, notably "upper PV's" as a pressurised chamber 1 in a pressure container shown in a cross-sectional view in Fig. 5. In short, it is a combination of light weight in any case, and strength and mechanical anchoring in the case of overmoulding.

More specifically, the product is injected with a higher wall thickness/injection length ratio than the one under normal limitation, by which is meant that when injecting PET, this goes along with a certain wall thickness, e.g. a product of 1 mm thick in a cold mold. PET material can typically be injected over a distance of 60 mm by 1 mm thick only, i.e. 6 cm against a thickness of 1 mm. E.g. with preforms of 3 mm thick, the longest PET preform to be achieved is thus up to 18 cm. Actually this simply consists of a ratio, wherein PET is thus characterized by an injecting/wall thickness of 60 : 1. In other words, it is possible to inject over a maximum distance up to 60 mm for each mm wall thickness, i.e. no more than 6 cm. Therefore, in case a little more is required such as up to 8 cm in height, this corresponds to a need of at least about 1,2 mm, in accordance with said ratio 60 : 1 rule, actually yielding 80 : 1,3 mm. However, if an injection is required with an average wall thickness of 1 mm on the basis of said ribs, thereby also injecting this entirely in PET, this would require at least such a wall thickness to an extent that it would make the final product far too heavy. Therefore, ribs are made in the preform, which need to have a certain thickness with regard to the wall thickness that is required, which is 1,3 mm. Between the ribs, merely 0,6 mm is made, whereby an average of 1 is thus yielded though. A non-uniform distribution is thus allowable, provided that the overall ratio is 1,3 mm. It needs to be continuous, and it must match said injection length. The configuration is in accordance with a rib, resp. tooth profile as shown in Fig. 1, resp. 2.

With a certain length, a flow path/wall thickness ratio of 60 : 1 must be satisfied, e.g., merely up to 100 : 1 or 120 : 1, in any case more than 60 : 1. It is not possible to make the whole product with that wall thickness, because it doesn't get fully injected then. Conversely, in case the product is made completely like this, it would be much too heavy.

For PET, the injection length/wall thickness ratio is 60 : 1. For having PET injected well, the corresponding ratio of L/ε needs to be smaller than a certain value: the length L is fixed, e.g. 10 cm and the wall thickness ε is 1,5 mm, which yields 100:1,5 = about 66,66 by 1. However 1,5 is too much. In case the requirement is to work at 1 mm, this yields a ratio of 100 to 1. So, the need here is of about 1,6 or 1,7, possibly even 2. If 2 mm is taken, this yields a ratio of 50 : 1, which is correct. The other parts then follow the ratio of 100 : 1. That is too much, since this corresponds to an average of 75 : 1. It is easier when taking it with 2 and 1 unit resp. So the injection length is 10 cm, the wall thickness here is 2 mm, and resp. 1 mm, thus yielding as ratio 50 : 1, respectively 100 : 1. This cannot be normally injected, since it is too heavy. This is the reason why it is done that way, thereby creating an average wall thickness of 1,5 mm, which is still in excess. Overweight means too expensive. So the aim is to work as thin as possible, but it is not possible to work below the actual limits being determined for the plastic. There is thus a need to inject products with a certain length and wall thickness, which cannot be injection molded in PET for example. PET can never reach a higher ratio than said 60 : 1, because PET is characterized by said 60 : 1 ratio, whereas polyethylene is characterized by a ratio of 300 : 1. The latter thus enables to inject much further.

However, the ratio 100 : 1 is not feasible either. So there are two states that cannot be realized separately, which is only achievable with an average however, whereas the only solution proposed to meet these two conditions consists of a ribbed preform according to the invention that is provided with a specific profile allowing an averaging.

For example, the profile may be smoothed instead of just a block shape. The purpose is that when injecting material, it will constantly follow a path. In the first phase, it will be affordable that these ribs get fully injected, whereas in a second step, the adjacent parts located between said ribs are getting full-injected starting from said ribs, because it is not possible to inject through completely in one time between the ribs.

With the ribbed preform, less PET material is needed, whereas a stronger preform is achieved with less PET than in the case of a preform with simply an equal mean wall thickness.

The first advantage is the ability of injecting lighter average, but this is not applicable for preforms, since they may cause restrictions due to warming, owing to some areas that are thicker thus heating up slower, whereas other areas are thinner thereby heating up quicker when blowing. Therefore, preforms can be made yet, but they cannot be blown, resulting in that it is not possible to get a bottle blown therefrom, so that such preforms are completely useless. Indeed, all preforms are merely intermediate injection molded products which are intended to be blown, since it is actually a semi-finished product.

Thanks to a specific application of the ribbed preform according to the invention in the case of overmoulding, there is both an inner and an outer preform with contiguous and interlocking vertical or longitudinal ribs: in said inner and outer preform the ribs hook into each other, whereas the final product remarkably shows no rib. Indeed, in the finished product, there are actually no ribs any more, with the great advantage that the inner and outer preform can be double injection molded in two times, each individually on its own, in the meaning that the inner and outer preform are injected separately.

By virtue thereof, the milk preform can be injected still lighter. Both the inner and the outer preform must meet the 60/1 rule, whereas there is advantageously no need therefor with those ribs. So, more weight is thus saved. Indeed, the final preform thus needs less PET material when thus double injected by separating in two times than in case the same preform would be injected in one single time.

Another aspect arises when the inner and the outer preform are not made both of the same PET material, but instead, the inner and the outer preform are injected from two non-complementary materials such as polypropylene and PET resp.. Then those ribs offer extra added value if they are provided with an undercut. Indeed, polypropylene and PET do not normally adhere to one another. This causes delamination when blowing, which is thus prevented thanks to the invention, owing to a mechanical anchoring of the two layers.

Generally, in accordance with a preferred embodiment of the invention, in order to create a main barrier, the outside thereof is the one of PET, whereas polypropylene is provided on the inside, thereby maintaining both a visual and physical contact of a PET bottle. A polypropylene bottle has a completely different feeling indeed, is much heavier. Besides, PET is better formable as well.

In addition to preforms, the invention yet relates to injection molded products in general as well, in other words, not only semi-finished products, but also finished products, which no longer need to be blown though. An example of this is shown in Figs. 5 to 10 with respect to injection molded products, such as so-called upper pv's that form a top component of a certain type of pressure container. In this case, a wall thickness of 1,5 mm e.g. is yet achievable even though it may provide insufficient resistance to pressure: it is injection molded but it expands too much in case a pressure of e.g. 8 bar is applied thereon. For a wall thickness of 1,5 mm, some parts can be made with a wall thickness of 2 mm and some other parts with 1 mm wall thickness, whereby the parts of 2 mm provide additional strength, whereas said added ribs provide additional strength without the need to thicken the whole product completely.

This second aspect thus aims an additional reinforcement without having to increase the thickness of the entire wall, notably the combination of both for a thin-walled light-weight product, wherein said increased strength is a result of the light weight and the added rib, and in subsidiary order said latter reinforcement mode.

Fig. 11 shows in partial views a to d a general sequential representation of overmoulding with, in Φ₁, an injection mould 3 which is closed; in Φ₂, the mould which is opened into its 2 mould halves, 31 as the core side and 32 as the cavity side; in Φ₃, a grab arm 4, which arrives therebetween and receives products 11, 12, and finally, in Φ₄ the grab arm 4, which places bottommost products 12 onto topmost cores 31'.

Fig. 12 shows said one grab arm 4, which is provided with a vacuum plate 40 for the reception of injection moulded products 11, 12. Opposite thereto, the relevant mould plate 31 constituting the movable side, is represented, having e.g. 32 cores intended for the composite preforms 10 and 32 cores for the inner preforms 12, which each occupy virtually half of the plate surface, here on the top half.

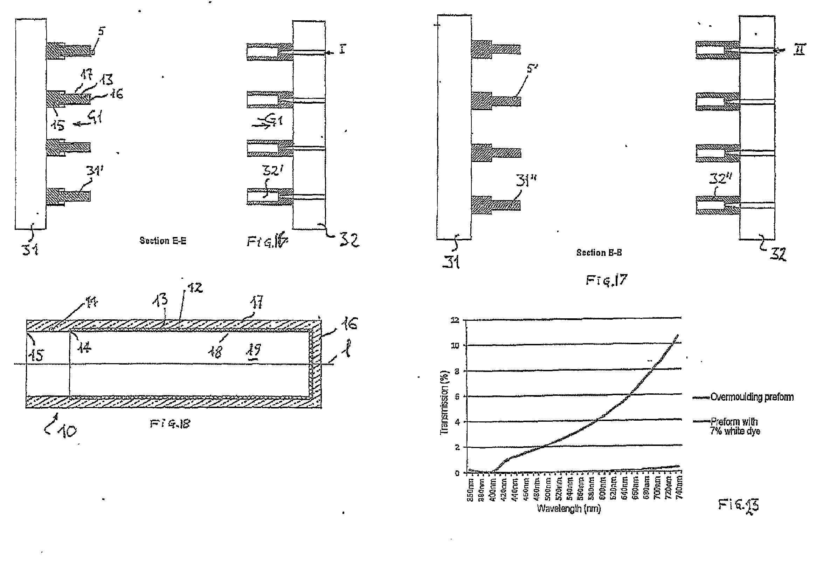

The mould plate 32 constituting the fixed side, correspondingly has 32 cavities for the composite preform and a further set of 32 cavities intended for the inner preform, which occupy the other half of the plate surface, the bottom half here. Fig. 13 shows the mould 3, closed in step 1 of the method, in the closed state, and the grab arm 4 in a standby position.

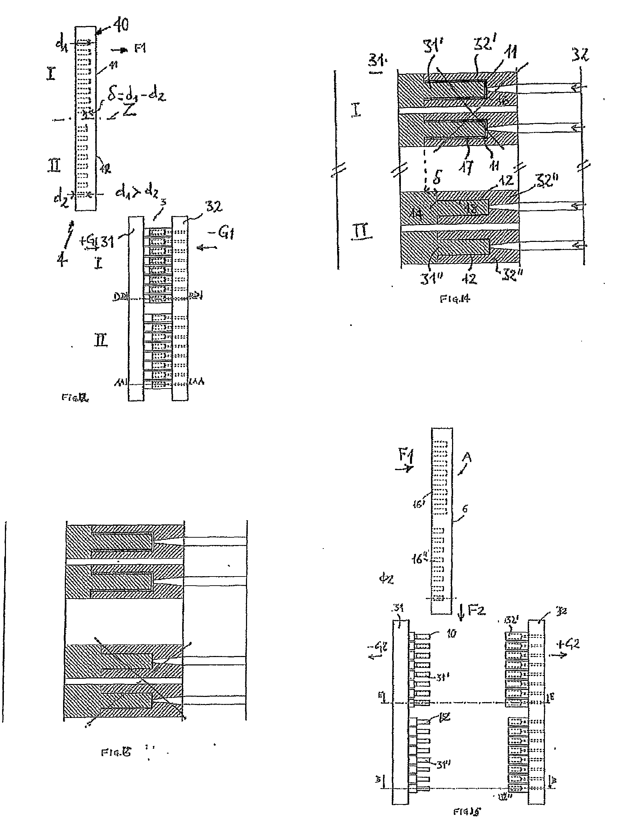

In Fig. 14, the mould plate is represented as the movable side 31 opposite the mould plate represented as the fixed side 32, in which the cavities for the composite preform 10 are also represented, in which the core is incorporated therefor, with there between the finished composite preform 10 with injected inner preform 12.

Fig. 15 is an analogous representation to the previous Fig. 14, consisting in a cross-sectional view through the line A-A, though in this case as the finished product with regard to the inner preform 12.

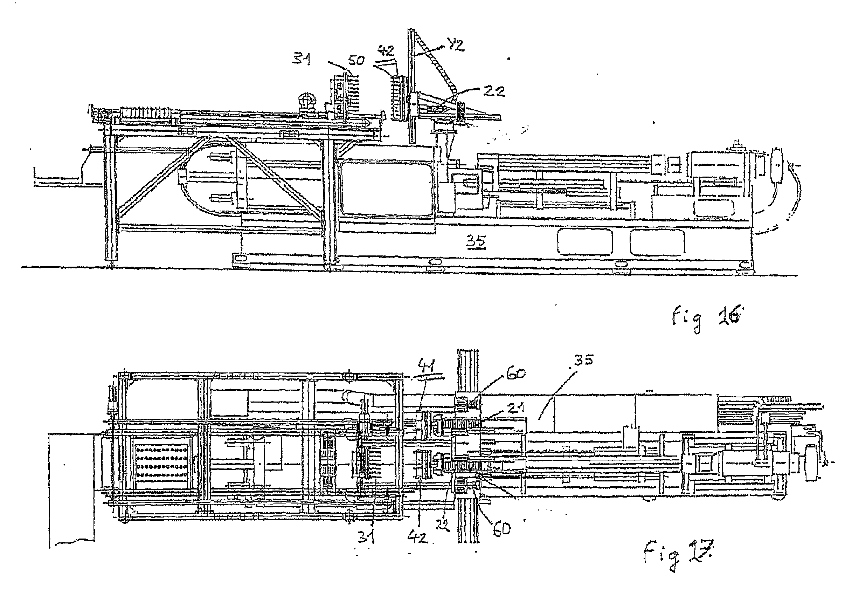

Fig. 16 represents the following phase 2, wherein the mould 3 is opened, in particular with a section along the line E-E in the previous Fig., on which the topmost 32 products constitute the composite preforms 10, with inner preforms.

Fig. 17 is an analogous representation to the previous Fig., though of a section along the line B-B, with representation of the bottommost 32 products, which represent only the 32 inner preforms.

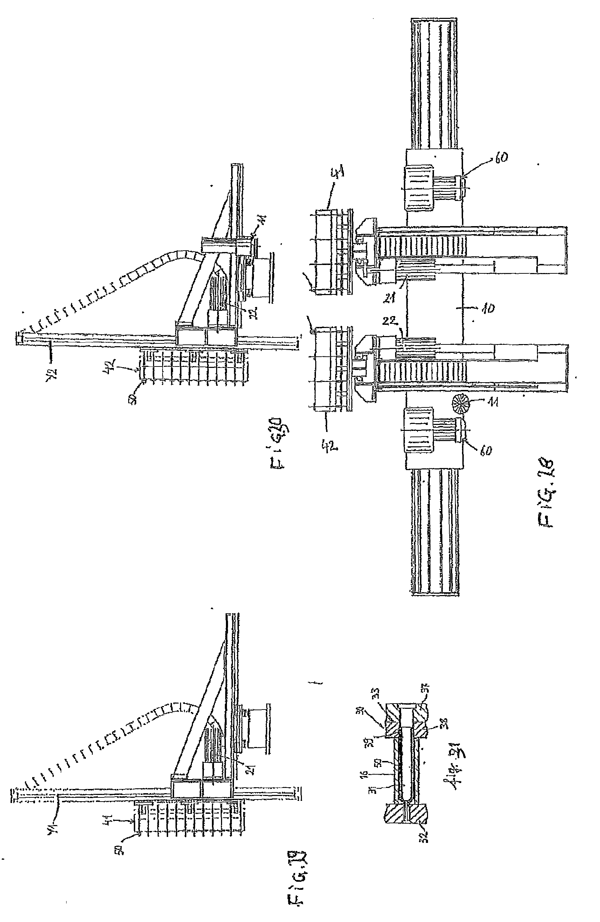

Fig. 18 is a schematic representation of the so formed finished product consisting of said composite preform, in which the inner preform is accommodated.

Fig. 19 further shows the third phase of the method, wherein the grab arm 4 with the vacuum plate 40, coming from the standby position, presently receives all products from the cores 33.

Fig. 20 is a sectional representation along the line C-C in the previous Fig. showing a cross section, wherein the bottommost 32 products, being the inner preforms, are transferred into the vacuum plate 40.

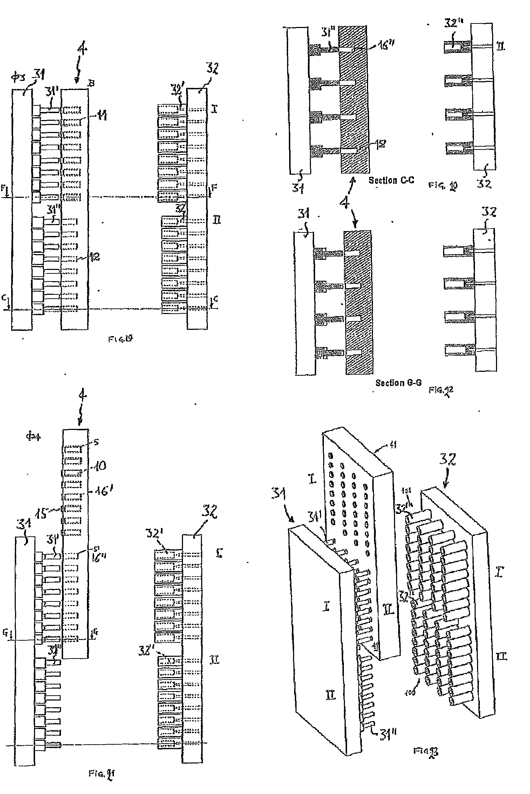

Fig. 21 schematically represents the fourth step of the method according to the invention, wherein the grab arm moves upwards with the vacuum plate with the injection moulded products. The 32 bottom products being the inner preforms, are transferred herein onto the cores 33 of the 32 topmost composite preforms 10. Next, the topmost finished products are deposited onto a discharge conveyor 100.

Fig. 22 further shows a cross section along the line G-G in the previous Fig., wherein the injection moulded inner preforms 12 stand on the topmost cores 33.

The robot arm then moves further vertically, with the 32 topmost products therein being the composite preforms, wherein these are further expelled from the vacuum plate 40 and are thus ready for packing.

As soon as the robot arm 41 has disappeared from between the mould 3, the mould can reclose, just as in step 1. It is then ready to injection mould the following products consisting of 32 integrated preforms 10 at the top and 32 inner preforms 12 at the bottom.

It is to be understood that the method outlined above with the associated figures, is merely an example of embodiment, which is given only by way of non-limiting example, without that it may be considered that the present scope of protection is limited thereto.

The overmoulding method can be used to produce bicolour preforms. For this purpose, the inner and outer preforms 11 are injected with a different colour, or only the inner or outer preform is coloured. As a result of selective recesses in the inner preform 12, some specific designs and colour variations are obtainable.

For example, an opaquely coloured inner preform, wherein in the longitudinal axis of the preform a through-recess is provided, and a transparent outer preform 11. This generates a transparent window over the entire length of the preform and bottle, whereby the filling level of the bottle can be observed.

As far as the addition of two different materials is concerned, the described method for producing overmoulding preforms likewise allows the inner and the outer preform 11 to be injection moulded in another material. This can have special advantages for, e.g. gas barrier, moisture barrier or hot-fill applications. The outer preform 11 can be produced from standard PET, and the inner preform 12 from a high barrier material or a hot-fill material. If so desired, this allows the use of a higher proportion of secondary material for barrier applications compared with known multilayer preforms.

For hot-fill applications, wherein the complete bottle must standardly be made of expensive hot-fill material, the inner preform alone may consist in this case of secondary material.

For further applications, the inner preform could consist, e.g. of a polyolefin, and the outer preform of PET. This bottle combines the mechanical and gas barrier properties of PET with the chemical barrier, moisture barrier and thermal properties of polyolefins.

Even though this can call for a longer vertical movement between the primary and secondary injection step, it does ensure two completely separate hot runners for the primary and secondary material a, b. In addition to an extreme simplification of the hot runner systems, this ensures greater flexibility for the material, since both hot runners can be set at mutually independent processing temperatures.

Examples of insert-overmoulding with unitized machine:
Insert-overmoulding preforms were produced on a dual-cavity 2K PET injection machine. The hot runner was mounted such that the 'a' material can be injected individually into the top cavity and the b material can be injected individually into the bottom cavity.

The cavities were mounted such that in the bottom cavity an inner preform was produced without screw thread, and in the top cavity an outer preform was produced with PCO screw thread. In the top cavity a core having a diameter of 0,6 mm less than the core in the bottom cavity has been placed.

The take-off robot was programmed such that, after one cycle, the preform has been taken off the bottom core and placed on the top core, whilst the finished preform has been removed from the top core and subsequently cooled.

### Materials

Test 1: in a first test, an overmoulding preform was produced, the inner layer was coloured blue in order to be able to visually evaluate both layers.

Weight of inner preform 6,2 g; total weight 25,8 g
- A material (outer preform): PET, not coloured.
- B material (inner preform): PET, coloured blue.

From the produced preforms, bottles were blown and evaluated. Both layers were present in the expected ratio and there was good adhesion between the layers.

Test 2: In a second test, a milk preform having a highest possible light barrier was produced with overmoulding.

Weight of inner preform 6,5 g; total weight 26,3 g
- A material (outer preform): coloured with 5% white dye.
- B material (inner preform): coloured with 1% black dye.

From the produced preforms, bottles were blown and evaluated for light barrier with a spectrophotometer. The results indicated a markedly improved light barrier compared with only white coloured bottles.

## Claims

1. Hollow injection molded article made of plastic material esp. comprising a wall portion (17) and a bottom portion (16) extending along an axis (ℓ) thereof, wherein the wall portion is composed of at least one layer of variable thickness (8), wherein a plurality of ribs (96) is provided in said axis direction (ℓ), constituting a set of longitudinal ribs (96), wherein said wall has a tooth profile (95) with a periodic nature which varies periodically between a minimum threshold value (m) and a maximum value (M) which is determined by both material parameters being a typical injection mold length (Ls) and/or a variable thickness ratio (εmax/εmin) which are characteristic for said plastic material, wherein it said hollow injection molded article consists of a preform (10; 82) for blow molding a container (91; 92), comprising a neck portion (19) with its wall portion (17) adjacent thereto, extending along the axis (ℓ), wherein the preform wall (17) is composed of at least one layer with a variable thickness (6), wherein a plurality of ribs extending in said axis direction (ℓ) are provided, whereby longitudinal ribs (96) are formed at the surface thereof (10),
wherein it consists of an overmoulding preform (10; 82) comprising two different
non-complementary
materials (a, b), with an inner preform and an outer preform, wherein the inner and outer preforms have contiguous vertical ribs (96), whereas the final product (91; 92) has no such longitudinal ribs remaining visible,
wherein the inner and outer preforms are composed of two different and non-complementary materials,
**characterized in that** the inner and outer preforms have contiguous vertical ribs with an undercut (64), and **in that** a mechanical anchoring between the inner and outer preforms is established therewith.

2. Hollow article according to claim 1, **characterized in that** said wall has a square wave profile (95).

3. Hollow article according to claim 2, **characterized in that** said profile is a square-wave profile with steep flanks (94).

4. Hollow article according to any one of the claims 1 to 3, **characterized in that** said profile has a variable rib width.

5. Hollow article according to claim 4, **characterized in that** said profile has a periodic variation.

6. Hollow article according to one of the claims 4 or 5, **characterized in that** said articles (1; 10) are equipped with vertical ribs (96) being injection-molded, wherein said articles have an increased wall thickness/injection mold length ratio, thereby providing thin-walled and light-weight articles (1; 10) with an increased strength.

7. Hollow article according to any one of the claims 1 to 6, **characterized in that** the space between the ribs (96) is not greater than twice the width of a rib (96).

8. Hollow article according to claim 1, **characterized in that** the inner and outer preforms have a different color, or wherein only the inner or outer preform is colored, also including selective recesses in the inner preform with specific designs and variations in color.

9. Hollow article according to claim 1, **characterized in that** the inner preform is colored opaque, wherein in the longitudinal axis (ℓ) of the preform, a through-recess is provided, and a transparent outer preform, comprising a control window over the entire length of the preform, resp. container through which its filling level is perceptible.

10. Hollow article according to claim 1, **characterized in that** it consists of an overmoulding preform comprising two different materials, with the inner and the outer preform made of another molding material comprising a barrier, notably against gas, moisture or light.

11. Hollow article according to claim 1 or 10, **characterized in that** the outer preform is made from standard PET, and the inner preform from a high barrier material or hotfill material resp.

12. Hollow article according to one of the claims 1, 10 or 11, **characterized in that** the inner preform is made of a polyolefin, and the outer preform of PET resp., wherein it combines the mechanical and gas barrier properties of PET with the chemical barrier, moisture barrier and thermal properties of polyolefins.

13. Hollow article according to one of the claims 11 or 12, intended as containers for dairy products, **characterized in that** it has a very high light barrier, comprising an inner preform made from a material which is light-tight, or opaque, and a corresponding outer preform which is transparent or has a color, wherein the produced milk bottle is white on the outside, while on the inside it has a black or gray layer of plastic as light barrier, under use of an overmoulding process consisting of making the preforms to start with the injection moulding of the gray inner layer, on which a 2^{nd} white coat is further injected, which ensures the light barrier required at ultra-high temperature (UHT) milk bottles.

14. Method for manufacturing plastic hollow articles by injection moulding, as defined in one of the claims 1 to 13, preforms for containers, wherein primary raw material is injected into a mould (3) having a core side (31) and a cavity side (32), between which hollow articles (10) are formed, after which the mould (3) is opened into its two halves (31, 32), the cores (33) whereof each bear a hollow article, **characterized in that** composite preforms (10) are made as said hollow articles, which consist of sub-preforms (11, 12) and which are intended to be worked into plastics containers, **in that** secondary raw material for producing a secondary preform (12) conjugated to each preform (10) is injected into the injection mould (3), which is equipped with multicavities with an even number of at least 2 of cavities and cores (33, 34), and **in that** both sub-preforms (11) and (12) are injected at the same time, wherein
in a 1^{st} step (Φ1) the injection mould (3) containing the injected composite preform (10) and secondary sub-preform (12) is closed, and a gripping member (4) provided with a set of receiving members (16) is set in a standby position (A) aside from the mould (3);
in a 2^{nd} step (Φ2) the forming mould (3) is opened in its cavity side (32) and core side (31), which are driven apart from each other, wherein each primary core (33) bears an injected composite preform (10), and respectively the secondary core (33') bears a secondary inner preform (12);
in a 3^{rd} step (Φ3), the gripping member (4) is set in motion, under the drive of a driving unit (5) according to a preset direction of movement between the set-aside standby position (A) and an active take-over operating position (B), which is directed to the core side (31) of the mould (3), wherein the injected composite preform (10) and the secondary sub-preform (12) are cooled and are taken over from the core side (31) by the gripping member (4) by means of suction means (6), wherein the composite preform (10) and the secondary sub-preform (12) are received in the corresponding receiving members (16);
in a 4^{th} step (Φ4), the gripping member (4) is further moved into a further operating position (C), in which it places the received secondary inner preforms (12) onto the respective primary cores (33) and continues to hold said preforms (11) in place, with the formation of said integrated preform (10) composed of the primary preform (11) and its added secondary inner preform (12), after which the gripping member (4) is moved back into the set-aside standby position (A) in order to expel the so produced integrated composite preforms (10) to a discharge unit for further treatment, whereby one full cycle (O) is thus completed and whereupon the forming mould (3) is then closed again.

15. Method according to claim 14, **characterized in that** in step (Φ3) the one gripper arm (4) is moved (H) up to between both mould halves (31, 32) from which it receives the composite and secondary preforms (10, 12) for producing in step (Φ4) the integrated composite preform (10) by means of one overmoulding sequence (Φ1, Φ2, Φ3, Φ4) thereby accomplishing one cycle (O), yet starting again with a new set of simultaneously injected preforms (11 , 12), wherein the production process is restarted in loop (O) for a new cycle (O') (Φ1', Φ2', Φ3', Φ4') in this prescribed order.

## Patentansprüche

1. Hohles Spritzgusserzeugnis aus Kunststoffmaterial, insbesondere umfassend einen Wandabschnitt (17) und einen Bodenabschnitt (16), die sich entlang einer Achse (ℓ) davon erstrecken, wobei der Wandabschnitt aus wenigstens einer Schicht variabler Dicke (ε) zusammengesetzt ist, wobei eine Vielzahl von Rippen (96) in der Achsenrichtung (ℓ) vorgesehen ist, die einen Satz von Längsrippen (96) bilden, wobei die Wand ein Zahnprofil (95) mit periodischem Charakter aufweist, der periodisch zwischen einem minimalen Schwellenwert (m) und einem maximalen Wert (M), der von beiden Materialparametern bestimmt wird, die eine typische Spritzgießformlänge (Ls) und/oder ein variables Dickenverhältnis (εmax/εmin) sind, die für das Kunststoffmaterial charakteristisch sind, variiert,
wobei das hohle Spritzgusserzeugnis aus einer Vorform (10; 82) zum Blasformen eines Behälters (91; 92) besteht, der eine Halsöffnung (19) mit seinem daran angrenzenden Wandabschnitt (17) umfasst, der sich entlang der Achse (ℓ) erstreckt, wobei die Wand (17) der Vorform aus wenigstens einer Schicht mit variabler Dicke (2) besteht, wobei eine Vielzahl von sich in Achsrichtung (ℓ) erstreckenden Rippen vorgesehen sind, wobei an ihrer Oberfläche (10) Längsrippen (96) ausgebildet sind,
wobei es aus einer umspritzten Vorform (10; 82) besteht, die zwei unterschiedliche nicht komplementäre Materialien (a, b) mit einer inneren Vorform und einer äußeren Vorform umfasst, wobei die innere und die äußere Vorform zusammenhängende vertikale Rippen (96) aufweisen, während das Endprodukt (91; 92) keine derartigen Längsrippen, die sichtbar bleiben, aufweist, wobei die innere und die äußere Vorform aus zwei unterschiedlichen und nicht komplementären Materialien zusammengesetzt sind,
**dadurch gekennzeichnet, dass** die innere und die äußere Vorform aneinandergrenzende vertikale Rippen mit einem Hinterschnitt (64) aufweisen und dass damit eine mechanische Verankerung zwischen innerer und äußerer Vorform hergestellt wird.

2. Hohles Erzeugnis nach Anspruch 1, **dadurch gekennzeichnet, dass** die Wand ein Rechteckwellenprofil (95) aufweist.

3. Hohles Erzeugnis nach Anspruch 2, **dadurch gekennzeichnet, dass** das Profil ein Rechteckprofil mit steilen Flanken (94) ist.

4. Hohles Erzeugnis nach einem der Ansprüche 1 bis 3, **dadurch gekennzeichnet, dass** das Profil eine variable Rippenbreite aufweist.

5. Hohles Erzeugnis nach Anspruch 4, **dadurch gekennzeichnet, dass** das Profil eine periodische Variation aufweist.

6. Hohles Erzeugnis nach einem der Ansprüche 4 oder 5, **dadurch gekennzeichnet, dass** die Erzeugnisse (1; 10) mit vertikalen Rippen (96) im Spritzgussverfahren ausgestattet sind, wobei die Erzeugnisse ein erhöhtes Verhältnis Wandstärke/Spritzgusslänge aufweisen, wodurch dünnwandige und leichtgewichtige Erzeugnisse (1; 10) mit erhöhter Festigkeit bereitgestellt werden.

7. Hohles Erzeugnis nach einem der Ansprüche 1 bis 6, **dadurch gekennzeichnet, dass** der Abstand zwischen den Rippen (96) nicht größer ist als die doppelte Breite einer Rippe (96).

8. Hohles Erzeugnis nach Anspruch 1, **dadurch gekennzeichnet, dass** die innere und die äußere Vorform eine unterschiedliche Farbe haben oder dass nur die innere oder die äußere Vorform gefärbt ist, einschließlich gezielter Aussparungen in der inneren Vorform mit spezifischen Designs und Farbabänderungen.

9. Hohles Erzeugnis nach Anspruch 1, **dadurch gekennzeichnet, dass** die innere Vorform opak eingefärbt ist, wobei in der Längsachse (ℓ) der Vorform eine durchgehende Aussparung vorgesehen ist, und dass eine transparente äußere Vorform ein Prüffenster über die gesamte Länge der Vorform bzw. des Behälters aufweist, durch das ihre/sein Füllstand erkennbar ist.

10. Hohles Erzeugnis nach Anspruch 1, **dadurch gekennzeichnet, dass** es aus einer umspritzten Vorform besteht, die zwei unterschiedliche Materialien mit der inneren und der äußeren Vorform aus einem anderen Formmaterial umfasst, das eine Barriere aufweist, insbesondere gegen Gas, Feuchtigkeit oder Licht.

11. Hohles Erzeugnis nach Anspruch 1 oder 10, **dadurch gekennzeichnet, dass** die äußere Vorform aus Standard-PET und die innere Vorform aus einem High-Barrier-Material bzw. Hotfill-Material hergestellt ist.

12. Hohles Erzeugnis nach einem der Patentansprüche 1, 10 oder 11, **dadurch gekennzeichnet, dass** die innere Vorform aus einem Polyolefin und die äußere Vorform aus PET besteht, wobei es die mechanischen und Gasbarriere-Eigenschaften von PET mit den Chemikalienbarriere-, Feuchtigkeitsbarriere- und thermischen Eigenschaften von Polyolefinen kombiniert.

13. Hohles Erzeugnis nach einem der Ansprüche 11 oder 12, bestimmt, als Behälter für Molkereiprodukte zu dienen, **dadurch gekennzeichnet, dass** es eine sehr hohe Lichtbarriere aufweist, umfassend eine innere Vorform aus lichtdichtem oder undurchsichtigem Material und eine entsprechende äußere Vorform, die transparent ist oder eine Farbe aufweist, wobei die hergestellte Milchflasche außen weiß ist, während sie innen eine schwarze oder graue Kunststoffschicht als Lichtbarriere aufweist, unter Verwendung eines Umspritzungsprozesses, bestehend aus der Herstellung der Vorformen, beginnend mit dem Spritzgießen der grauen Innenschicht, auf die weiter eine zweite weiße Schicht gespritzt wird, die die erforderliche Lichtbarriere bei Ultra-Hochtemperatur-Milchflaschen (UHT) sicherstellt.

14. Verfahren zur Herstellung von hohlen Kunststofferzeugnissen durch Spritzgießen von Vorformen für Behälter nach einem der Ansprüche 1 bis 13, wobei primäres Rohmaterial in eine Form (3) eingespritzt wird, die eine Kernseite (31) und eine Hohlraumseite (32) aufweist, zwischen denen hohle Erzeugnisse (10) gebildet werden, wonach die Form (3) in ihre beiden Hälften (31, 32) geöffnet wird, deren Kerne (33) jeweils einen Hohlkörper tragen,
**dadurch gekennzeichnet, dass** als Hohlkörper Verbundvorformen (10) hergestellt werden, die aus Teilvorformen (11, 12) bestehen und die dazu bestimmt sind, zu Kunststoffbehältern verarbeitet zu werden, dass sekundäres Rohmaterial zur Herstellung einer sekundären Vorform (12), die jeweils mit der Vorform (10) kombiniert wird, in die Spritzgussform (3) eingespritzt wird, die mit Mehrfachhohlräumen mit einer geraden Anzahl von wenigstens 2 von Hohlräumen und Kernen (33, 34) ausgestattet ist, und dass beide Teilvorformen (11) und (12) gleichzeitig gespritzt werden, wobei
in einem ersten Schritt (Φ1) die Spritzgussform (3), die die gespritzte Verbundvorform (10) und die sekundäre Teilvorform (12) umfasst, geschlossen wird und ein Greifelement (4), das mit einem Satz von Aufnahmeelementen (16) bereitgestellt ist, in einer Bereitschaftsposition (A) neben der Form (3) angeordnet ist;
in einem zweiten Schritt (Φ2) das Formwerkzeug (3) auf seiner Hohlraumseite (32) und Kernseite (31), die voneinander auseinandergefahren werden, geöffnet wird, wobei jeder Primärkern (33) eine eingespritzte Verbundstoff-Vorform (10) trägt, und der jeweilige Sekundärkern (33') eine sekundäre innere Vorform (12) trägt;
in einem dritten Schritt (Φ3) das Greifelement (4) unter dem Antrieb einer Antriebseinheit (5) entsprechend einer vorgegebenen Bewegungsrichtung zwischen der Abstell-Bereitschaftsposition (A) und einer aktiven Übernahmebetriebsposition (B), die auf die Kernseite (31) der Form (3) gerichtet ist, in Bewegung versetzt wird, wobei die eingespritzte Verbundvorform (10) und die sekundäre Teilvorform (12) gekühlt werden und von der Kernseite (31) durch das Greifelement (4) mittels Saugmitteln (6) übernommen werden, wobei die VerbundVorform (10) und die sekundäre Teilvorform (12) in den entsprechenden Aufnahmeelementen (16) aufgenommen werden;
in einem vierten Schritt (Φ4) das Greiforgan (4) weiter in eine weitere Betriebsposition (C) bewegt wird, in der es die aufgenommenen sekundären inneren Vorformen (12) auf die jeweiligen Primärkerne (33) aufsetzt und weiterhin die Vorformen (11) an Ort und Stelle hält, wobei die integrierte Vorform (10), die gebildet wird, die aus der primären Vorform (11) und ihrer hinzugefügten sekundären inneren Vorform (12) besteht, wonach das Greifelement (4) zurück in die Abstell-Bereitschaftsposition (A) bewegt wird, um die so hergestellten integrierten Verbundvorformen (10) zu einer Ausstoßeinheit zur weiteren Behandlung auszustoßen, wodurch ein vollständiger Zyklus (O) abgeschlossen ist und woraufhin das Formwerkzeug (3) dann wieder geschlossen wird.

15. Verfahren nach Anspruch 14, **dadurch gekennzeichnet, dass** im Schritt (Φ3) der eine Greiferarm (4) bis zwischen die beiden Formhälften (31, 32) hinaufbewegt (H) wird, aus denen er die Verbundvorform und die sekundäre Vorform (10, 12) zur Herstellung im Schritt (Φ4) der integrierten Verbundvorform (10) mittels einer Umspritzungssequenz (Φ1, Φ2, Φ3, Φ4) aufnimmt, wodurch ein Zyklus (O) vollendet wird, jedoch nochmal mit einem neuen Satz von gleichzeitig eingespritzten Vorformen (11, 12) gestartet wird, wobei der Produktionsprozess in Schleife (O) für einen neuen Zyklus (O') (Φ1', Φ2', Φ3', Φ4') in dieser vorgeschriebenen Reihenfolge neu gestartet wird.

## Revendications

1. Objet creux en matière plastique moulé par injection, en particulier comprenant une section de paroi (17) et une section de fond (16) s'étendant le long d'un axe (ℓ) de celui-ci, dans lequel la section de paroi est composée d'au moins une couche d'épaisseur variable (E), dans lequel plusieurs nervures (96) sont prévues dans la direction de l'axe (ℓ), constituant un ensemble de nervures longitudinales (96), dans lequel ladite paroi a un profil denté (95) ayant une nature périodique qui varie périodiquement entre une valeur de seuil minimale (m) et une valeur maximale (M) qui est déterminée par deux paramètres de matériau étant une longueur de moule à injection typique (Ls) et/ou un rapport d'épaisseur variable (Emax/Emin), qui sont caractéristiques pour ledit matériau plastique,
dans lequel ledit article creux moulé par injection consiste en une préforme (10 ; 82) destinée au moulage par soufflage d'un récipient (91 ; 92), comprenant une section de col (19) avec sa section de paroi (17) adjacente à celle-ci, s'étendant le long de l'axe (ℓ), dans lequel la paroi de préforme (17) est composée d'au moins une couche d'épaisseur variable (ε), dans lequel plusieurs nervures s'étendant dans ladite direction de l'axe (ℓ) sont prévues, moyennant quoi des nervures longitudinales (96) sont formées à sa surface (10),
dans lequel il est constitué d'une préforme de surmoulage (10 ; 82) comprenant deux matériaux non complémentaires différents (a, b), avec une préforme intérieure et une préforme extérieure, dans lequel les préformes intérieure et extérieure présentent des nervures verticales contigües (96), tandis que le produit final (91 ; 92) ne présente pas de telles nervures longitudinales demeurant visibles,
dans lequel les préformes intérieure et extérieure sont composées de deux matériaux différents et non complémentaires,
**caractérisé en ce que** les préformes intérieure et extérieure présentent des nervures verticales contigües avec une contre-dépouille (64), et **en ce qu'**un ancrage mécanique entre les préformes intérieure et extérieure est établi avec celle-ci.

2. Objet creux selon la revendication 1, **caractérisé en ce que** ladite paroi a un profil en onde carrée (95).

3. Objet creux selon la revendication 2, **caractérisé en ce que** ledit profil est un profil en onde carrée à flancs raides (94).

4. Objet creux selon l'une quelconque des revendications 1 à 3, **caractérisé en ce que** ledit profil a une largeur de nervure variable.

5. Objet creux selon la revendication 4, **caractérisé en ce que** ledit profil présente une variation périodique.

6. Objet creux selon l'une des revendications 4 ou 5, **caractérisé en ce que** lesdits objets (1; 10) sont équipés de nervures verticales (96) moulées par injection, lesdits objets ayant un rapport épaisseur de paroi/longueur du moule d'injection accru, ce qui procure des objets à parois minces et légers (1; 10) avec une résistance accrue.

7. Objet creux selon l'une quelconque des revendications 1 à 6, **caractérisé en ce que** l'espace entre les nervures (96) n'est pas supérieur à deux fois la largeur d'une nervure (96).

8. Objet creux selon la revendication 1, **caractérisé en ce que** les préformes intérieure et extérieure ont une couleur différente, ou dans lequel seule la préforme intérieure ou extérieure est colorée, comportant en outre des évidements sélectifs dans la préforme intérieure avec des motifs et des variations de couleur spécifiques.

9. Objet creux selon la revendication 1, **caractérisé en ce que** la préforme intérieure est colorée opaque, dans lequel un évidement traversant est prévu suivant l'axe longitudinal (ℓ) de la préforme, et une préforme extérieure transparente, comportant une fenêtre de contrôle sur toute la longueur de la préforme, respectivement du récipient au travers duquel son niveau de remplissage est perceptible.

10. Objet creux selon la revendication 1, **caractérisé en ce qu'**il consiste en une préforme de surmoulage comprenant deux matériaux différents, la préforme intérieure et la préforme extérieure étant constituées d'un autre matériau de moulage comportant une barrière notamment aux gaz, à l'humidité ou à la lumière.

11. Objet creux selon la revendication 1 ou 10, **caractérisé en ce que** la préforme extérieure est constituée de PET standard, et la préforme intérieure d'un matériau haute barrière ou d'un matériau de remplissage à chaud respectivement.

12. Objet creux selon l'une des revendications 1, 10 ou 11, **caractérisé en ce que** la préforme intérieure est constitué de polyoléfine, et la préforme extérieure de PET respectivement, combinant les propriétés mécaniques et de barrière aux gaz du PET avec les propriétés thermiques, de barrière chimique et de barrière à l'humidité des polyoléfines.

13. Objet creux selon l'une des revendications 11 ou 12, destiné comme récipients pour produits laitiers, **caractérisé en ce qu'**il présente une barrière lumineuse très forte, comprenant une préforme intérieure en un matériau qui est étanche à la lumière, ou opaque, et une préforme extérieure correspondante, qui est transparente ou colorée, la bouteille de lait produite étant blanche à l'extérieur, tandis qu'à l'intérieur elle présente une couche de matière plastique noire ou grise comme barrière lumineuse, avec utilisation d'un procédé de surmoulage consistant à réaliser les préformes à commencer par le moulage par injection de la couche interne grise, sur laquelle une 2^{ème} couche blanche est ensuite injectée, ce qui assure la barrière lumineuse requise pour les bouteilles de lait à ultra-haute température (UHT).

14. Procédé de fabrication d'objets creux en matière plastique par moulage par injection, tel que défini dans l'une des revendications 1 à 13, de préformes pour récipients, dans lequel de la matière première primaire est injectée dans un moule (3) comportant un côté noyau (31) et un côté empreinte (32), entre lesquels des objets creux (10) sont formés, après quoi le moule (3) est ouvert en ses deux moitiés (31, 32), dont les noyaux (33) portent chacun un objet creux, **caractérisé en ce que** des préformes composites (10) sont réalisées en tant que objets creux précités, qui consistent en sous-préformes (11, 12) et qui sont destinées à être transformées en récipients en plastique, **en ce que** de la matière première secondaire pour produire une préforme secondaire (12) conjuguée à chaque préforme (10) est injectée dans le moule à injection (3), qui est équipé de multicavités avec un nombre pair d'au moins 2 cavités et de noyaux (33, 34), et **en ce que** les deux sous-préformes (11) et (12) sont injectées en même temps, dans lequel
dans une 1^{ère} étape (Φ1), le moule à injection (3) contenant la préforme composite injectée (10) et la sous-préforme secondaire (12) est fermé, et un organe de préhension (4) muni d'un ensemble d'organes de réception (16) est mis en position d'attente (A) à l'écart du moule (3) ; dans une 2^{ème} étape (Φ2), le moule de formage (3) est ouvert en son côté cavité (32) et côté noyau (31), qui sont écartés l'un de l'autre, dans lequel chaque noyau primaire (33) porte une préforme composite injectée (10), et respectivement le noyau secondaire (33') porte une préforme interne secondaire (12) ;
dans une 3^{ème} étape (Φ3), l'organe de préhension (4) est mis en mouvement, avec l'entraînement d'une unité d'entraînement (5) selon un sens de déplacement prédéfini entre la position d'attente écartée (A) et une position opérationnelle (B) de prise active, qui est dirigée vers le côté noyau (31) du moule (3), dans laquelle la préforme composite injectée (10) et la sous-préforme secondaire (12) sont refroidies et sont reprises du côté noyau (31) par l'organe de préhension (4) par des moyens d'aspiration (6), dans lequel la préforme composite (10) et la sous-préforme secondaire (12) sont reçues dans les organes de réception correspondants (16);
dans une 4^{ème} étape (Φ4), l'organe de préhension (4) est encore déplacé dans une autre position opérationnelle (C), dans laquelle il place les préformes intérieures secondaires reçues (12) sur les noyaux primaires respectifs (33) et continue à maintenir lesdites préformes (11) en place, avec formation de ladite préforme intégrée (10) composée de la préforme primaire (11) et de sa préforme intérieure secondaire ajoutée (12), après quoi l'organe de préhension (4) est ramené dans la position d'attente écartée (A) afin d'expulser les préformes composites intégrées (10) ainsi produites vers une unité de décharge pour un traitement ultérieur, un cycle complet (O) étant ainsi achevé, après quoi le moule de formage (3) est ensuite refermé.

15. Procédé selon la revendication 14, **caractérisé en ce qu'**avec l'étape (Φ3) l'un des organes de préhension (4) est déplacé (H) jusqu'entre les deux demi-moules (31, 32) desquels il reçoit les préformes composites et secondaires (10, 12) pour réaliser à l'étape (Φ4) la préforme composite intégrée (10) au moyen d'une séquence de surmoulage (Φ1, Φ2, Φ3, Φ4) accomplissant ainsi un cycle (O), tout en recommençant avec un nouvel ensemble de préformes injectées simultanément (11, 12), dans lequel le processus de production est relancé dans la boucle (O) pour un nouveau cycle (O') (Φ1', Φ2', Φ3', Φ4') dans cet ordre prescrit
